# EUROPÄISCHE PATENTSCHRIFT

(11) **EP 1 054 168 B1**
(45) Veröffentlichungstag und Bekanntmachung des Hinweises auf die Patenterteilung: **13.07.2005**
(21) Anmeldenummer: 00108582.8
(22) Anmeldetag: 20.04.2000
(51) Int. Cl.: F16B 12/20

(54) **Verbindungsbeschlag zum lösbaren Verbinden zweier Möbelteile**
Connecting device for the releasable connection of two furniture parts
Ferrure pour l'assemblage démontable de deux éléments d'ameublement

(30) Priorität: 26.04.1999 AT 73399
(43) Veröffentlichungstag der Anmeldung: 22.11.2000
(73) Patentinhaber: Julius Blum GmbH, 6973 Höchst (AT)
(72) Erfinder: Huber, Edgar, 6971 Hard (AT); Bereuter, Klaus, 6850 Dornbirn (AT)
(74) Vertreter: Torggler, Paul Norbert, Dr.

(56) Entgegenhaltungen:
- DE-U- 29 721 068
- GB-A- 2 301 413
- US-A- 4 163 618

## Beschreibung

Die Erfindung bezieht sich auf einen Verbindungsbeschlag zum lösbaren Verbinden zweier Möbelteile, insbesondere zum Verbinden zweier plattenförmiger Möbelteile, mit einem an einem der Möbelteile zu befestigenden Zapfen und einem in eine flachseitige Bohrung in dem anderen Mobelteil einsetzbaren Beschlagkörper, in dem ein Spannteil gelagert ist, wobei der Zapfen in den Beschlagkörper ragt.

Ein Beispiel für einen Möbelverbinder ist beispielsweise in der AT 403 192 B der Anmelderin beschrieben.

Aus der GB 2 301 413 ist ein Verbindungsbeschlag bekannt geworden, der aus einem Befestigungselement und einem Spannelement besteht. Das Spannelement ist trommelförmig ausgebildet und bewirkt in der Montagelage bei dessen Drehung eine Fixierung des Befestigungselementes.

Die US 4,163,618 zeigt ebenfalls einen Verbindungsbeschlag, wobei zuerst ein Schaftteil durch ein Keilelement an die Innenseite der Bohrung eines Regalbrettes gepresst wird. Anschließend wird ein Bolzen in die Regalwand eingeschraubt und an einer Rippe des Beschlagkörpers eingehängt. Zuletzt wird durch Aufschrauben der Abdeckung eine gegenseitige Verklemmung erreicht. Die notwendigen Schritte der Montage sind bei dieser Vorrichtung relativ aufwendig.

Aufgabe der Erfindung ist es, einen konstruktiv einfachen Beschlag dieser Art zu schaffen, der es ermöglicht, Fachböden nachträglich in einem Möbelkorpus zu montieren bzw. diese aus einem solchen zu demontieren, ohne den Möbelkorpus zerlegen zu müssen.

Die erfindungsgemäße Aufgabe wird dadurch gelöst, daß der Beschlagkörper als Kreiszylindersegment mit einer bogenförmigen und einer zumindest annähernd flachen Wand ausgeführt ist, der bei gelöstem Beschlag in der flachseitigen Bohrung verschiebbar ist, und der Zapfen in der Spannstellung aus der bogenförmigen Wand des Beschlagkörpers herausragt, und wobei der Zapfen einen in Bezug zum Beschlagkörper axial unverschiebbaren Spreizteil und eine den Spreizteil umgebende Dübelhülse aufweist, die durch den Spannteil bewegbar ist.

Durch die erfindungsgemäße Ausführung ist es möglich, den Verbindungsbeschlag schräg und mit Abstand von der Bohrungswand in die flachseitige Bohrung einzusetzen und danach an die Bohrungswand zu schieben, sodaß der Zapfen aus dem Möbelteil, beispielsweise einem Fachbrett bzw. Fachboden herausragt. Das Fachbrett bzw. der Fachboden kann somit zwischen zwei fixierte Seitenwände eingesetzt werden. Die Ausbildung des Zapfens mit einem Spreizteil ist besonders günstig, da der Zapfen auch in Bohrungen mit sehr kleinem Durchmesser, beispielsweise 5 mm, eingesetzt werden kann.

Vorteilhaft ist vorgesehen, daß der Zapfen mit dem Beschlagkörper untrennbar verbunden ist. -

Um den Sitz des Beschlagkörpers in der Bohrung im Möbelteil zu verbessern, ist vorgesehen, daß an die flache Wand des Beschlagkörpers eine sich in Montagelage in der Bohrung radial erstreckende Strebe anschließt, deren freier Rand vorzugsweise an der Wand der Bohrung anliegt.

Vorteilhaft ist vorgesehen, daß die Strebe als Platte ausgeführt ist, die, zumindest in der Montagelage, in der Draufsicht das Kreiszylindersegment des Beschlagkörpers zu einem Vollkreis ergänzt.

Im Falle einer Platte deckt diese den Bohrungsboden oder die Bohrung als solches ab.

Die Strebe oder Klappe kann sowohl am Beschlagkörper starr angeformt sein als auch an diesem kippbar angelenkt.

Ein weiteres Ausführungsbeispiel der Erfindung sieht vor, daß am Kipphebel eine kreissegmentförmige Platte angeformt ist, die in der Spannstellung des Kipphebels die Bohrung, in die der Beschlagkörper eingesetzt ist, bereichsweise abdeckt. Um den Halt des Beschlagkörpers in der Bohrung zu stabilisieren, ist in einem Ausführungsbeispiel der Erfindung vorgesehen, daß der Beschlagkörper an seiner gebogenen Wand einen Sockel aufweist, durch den der Zapfen ragt. Der Sockel ist dabei vorteilhaft zylindrisch ausgeführt und weist einen Durchmesser auf der dem Durchmesser einer Bohrung in der Stirnwand des Möbelteils, durch die der Zapfen ragt, entspricht.

Nachfolgend wird ein Ausführungsbeispiel der Erfindung anhand der Figuren der beiliegenden Zeichnungen beschrieben. Es zeigen:

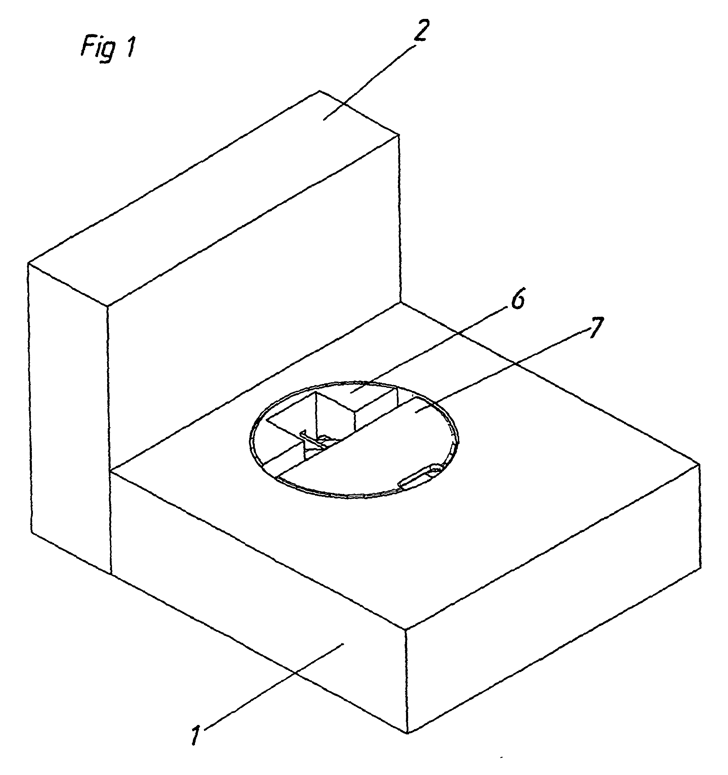

- Fig. 1: schaubildlich die Verbindung einer Seitenwand und eines Fachbrettes mittels eines erfindungsgemäßen Verbindungsbeschlages,

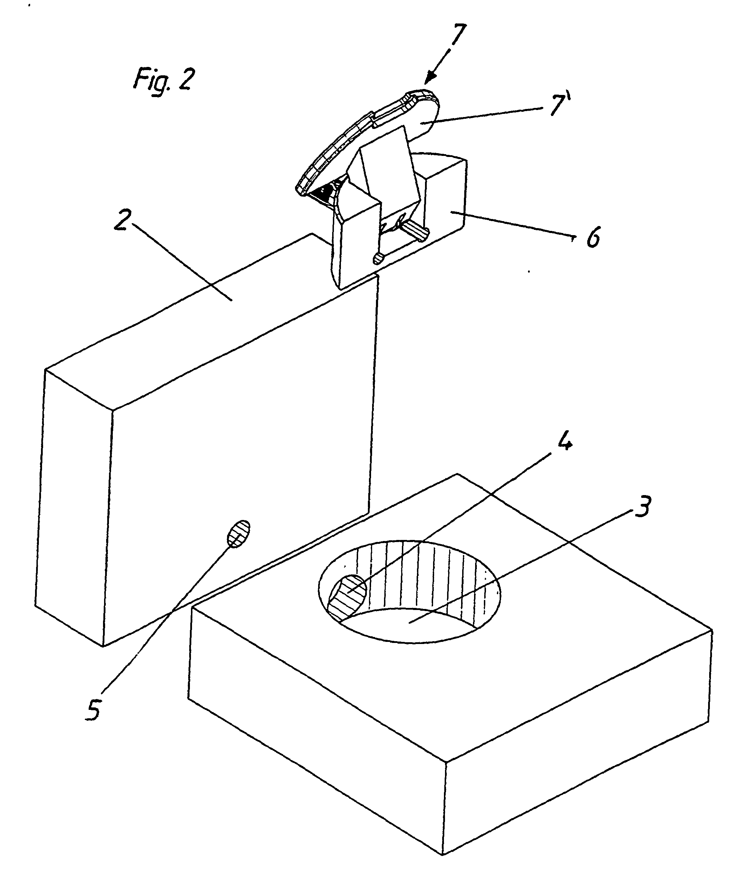

- Fig. 2: schaubildlich und auseinandergezogen eine Seitenwand, ein Fachbrett und einen erfindungsgemäßen Verbindungsbeschlag,

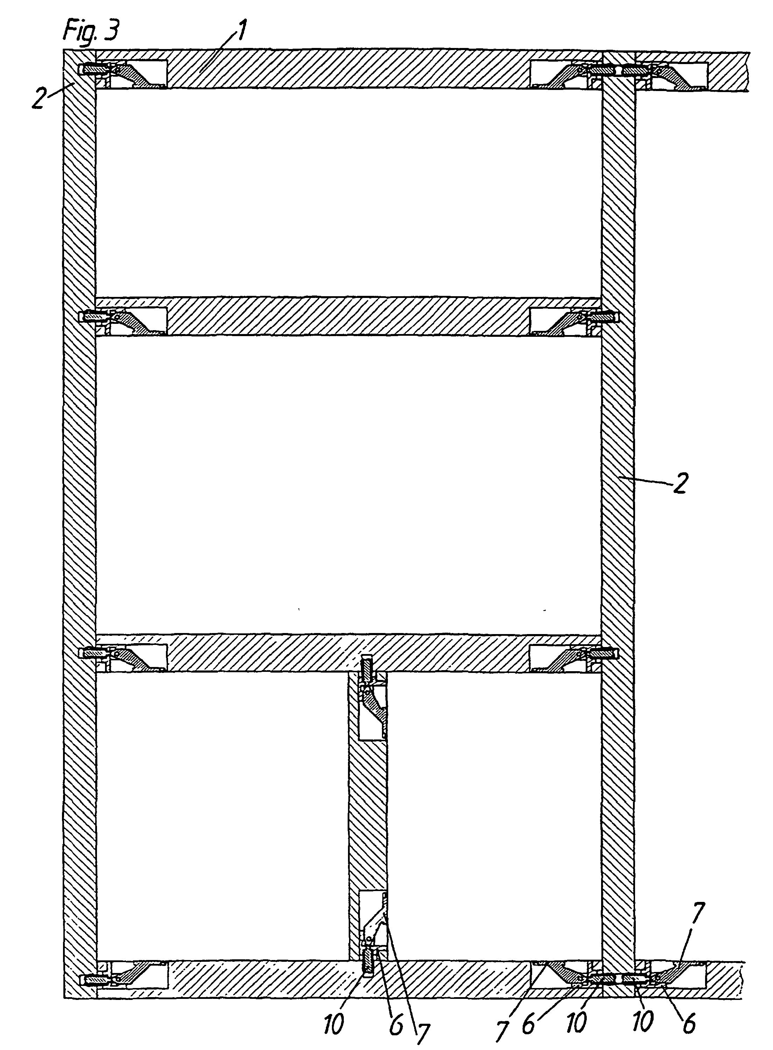

- Fig. 3: einen Schnitt durch ein Möbel, der durch die Verbindungsbeschläge verläuft,
- Fig. 4a-d: je einen Schnitt durch ein Fachbrett und eine Seitenansicht des Verbindungsbeschlages, wobei dieser in den verschiedenen Stadien des Einsetzens in das Fachbrett gezeigt ist,

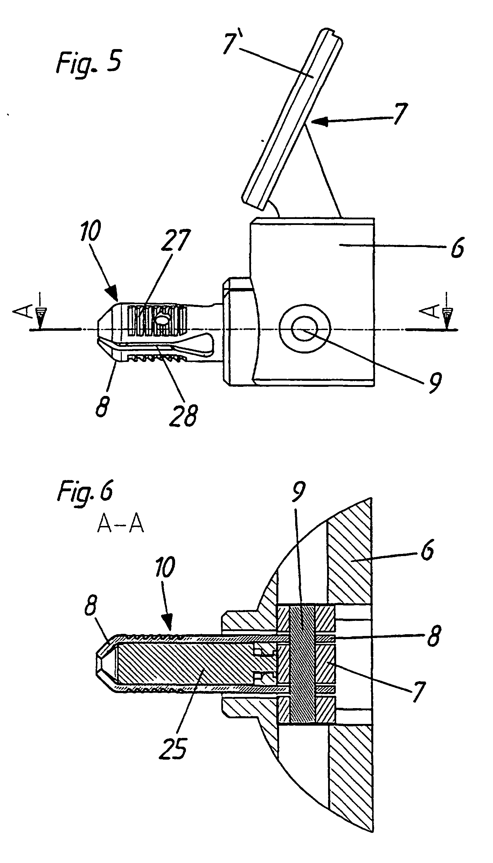

- Fig. 5: eine Seitenansicht eines erfindungsgemäßen Verbindungsbeschlages,
- Fig. 6: einen Schnitt nach der Linie A-A der Fig. 5,

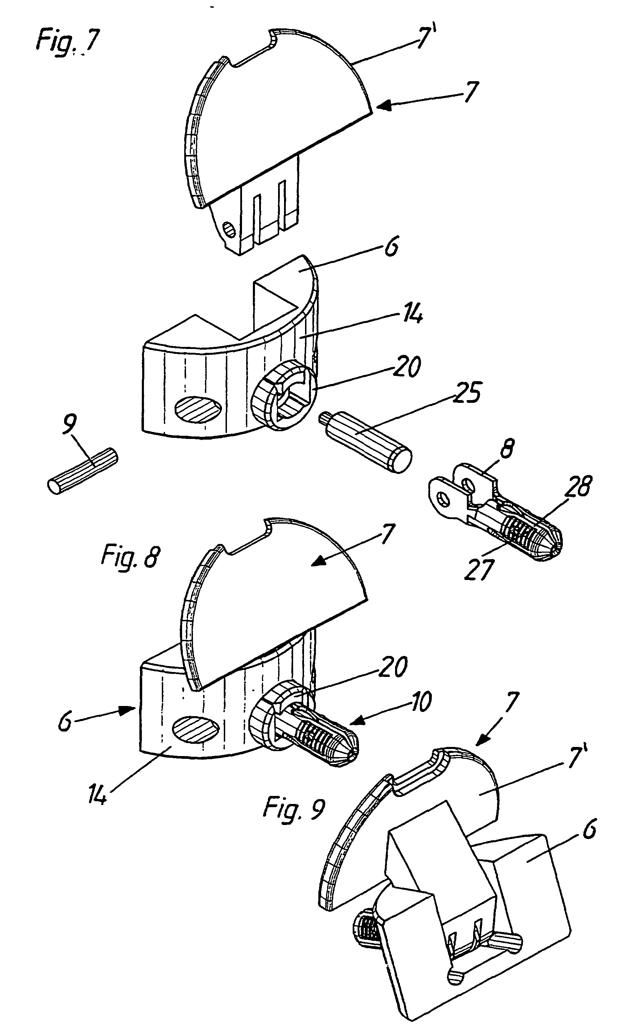

- Fig. 7: schaubildlich und auseinandergezogen einen Verbindungsbeschlag,
- Fig. 8: ein Schaubild eines Verbindungsbeschlages, wobei die gewölbte Wand gezeigt ist,
- Fig. 9: ein Schaubild eines Verbindungsbeschlages, wobei die gerade Wand gezeigt ist,
- Fig. 10: einen Vertikalschnitt durch eine Seitenwand, einen Fachboden und einen Verbindungsbeschlag in der unverspannten Stellung,
- Fig. 11: schaubildlich eine Seitenwand, einen Fachboden und einen Verbindungsbeschlag in der unverspannten Stellung, wobei die einzelnen Teile geschnitten gezeigt sind,
- Fig. 12: einen Vertikalschnitt durch eine Seitenwand, ein Fachbrett und einen Verbindungsbeschlag in der verspannten Stellung,
- Fig. 13: ein Schaubild einer Seitenwand, eines Fachbodens und eines Verbindungsbeschlages in der gespannten Stellung, wobei die Teile geschnitten gezeigt sind,
- Fig. 14-17: jeweils Schnitte durch eine Möbelseitenwand, Fachböden und erfindungsgemäße Verbindungsbeschläge in der verspannten Stellung, wobei verschiedene Einsatzhülsen gezeigt sind,
- Fig. 18: ein Schaubild eines weiteren Ausführungsbeispieles eines erfindungsgemäßen Verbindungsbeschlags,
- Fig. 19a-e: je einen Schnitt durch ein Fachbrett und eine Seitenansicht dieses Verbindungsbeschlages in verschiedenen Stadien des Einsetzens in die Bohrung im Fachbrett,
- Fig. 20: ein Schaubild eines weiteren Ausführungsbeispieles eines erfindungsgemäßen Verbindungsbeschlages und
- Fig. 21a-e: je einen Schnitt durch einen Fachboden und eine Seitenansicht des Verbindungsbeschlages, wobei der Verbindungsbeschlag in verschiedenen Stadien während des Einsetzens in die Bohrung im Fachboden gezeigt ist.

Die Figuren der Zeichnungen zeigen die Verbindung eines Fachbrettes 1 mit einer Möbelseitenwand 2 mittels eines erfindungsgemäßen Möbelverbinders.

Die Seitenwand 2 weist eine flachseitige Bohrung 5 auf. Das Fachbrett 1 ist mit einer flachseitig nicht durchgehenden Bohrung 3 versehen und einer stirnseitigen durchgehenden Bohrung 4, die in der Bohrung 3 mündet.

Der erfindungsgemäße Verbindungsbeschlag besteht aus einem Beschlagkörper 6, der als Kreiszylindersegment ausgeführt ist, und der in die flachseitige Bohrung 3 des Fachbrettes 1 eingesetzt wird, dem die Bohrung 4 durchragenden und in die Bohrung 5 der Seitenwand einsetzbaren Zapfen 10 und einem Spannteil.

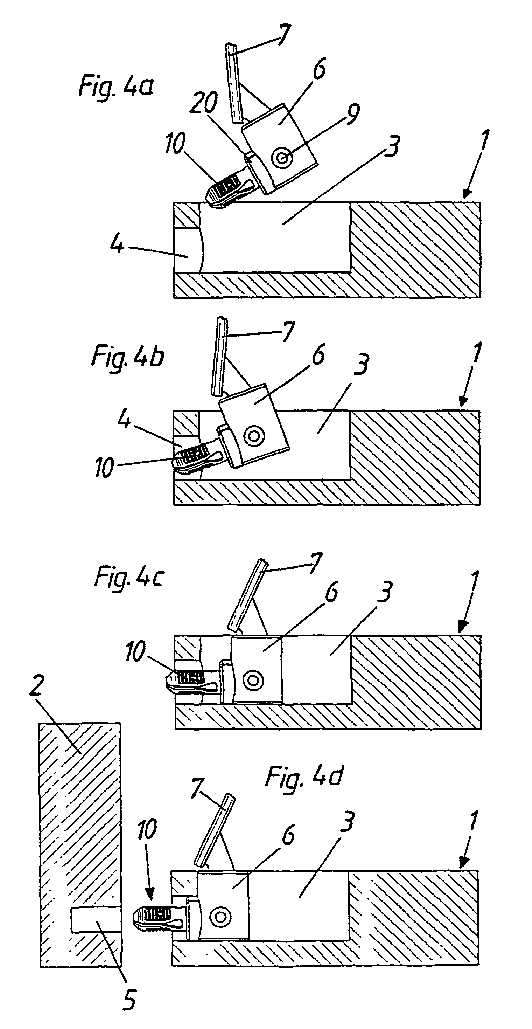

Die Länge des Zapfens 10 und des Beschlagkörpers 6 ist vorzugsweise kürzer als der Durchmesser der Bohrung 3, sodaß der Verbindungsbeschlag, wie in den Fig. 4a-4d gezeigt, bequem in die Bohrung 3 eingesetzt werden kann.

Der Spannteil ist in den gezeigten Ausführungsbeispielen als Kipphebel 7 ausgeführt. Der Kipphebel 7 ist über eine Achse 9 mit einer Dübelhülse 8 verbunden. Die Dübelhülse 8 ist vorzugsweise aus Metall gefertigt und weist Schlitze 28 auf, die das Spreizen der Dübelhülse 8 ermöglichen, und äußere Rippen bzw. Verzahnungen 27, die den Halt der Dübelhülse 8 in der Bohrung 5 verbessern.

Innerhalb der Dübelhülse 8 ist ein dornförmiger Spreizteil 25 angeordnet, der im Beschlagkörper 6 axial unverschiebbar verankert, beispielsweise vernietet ist.

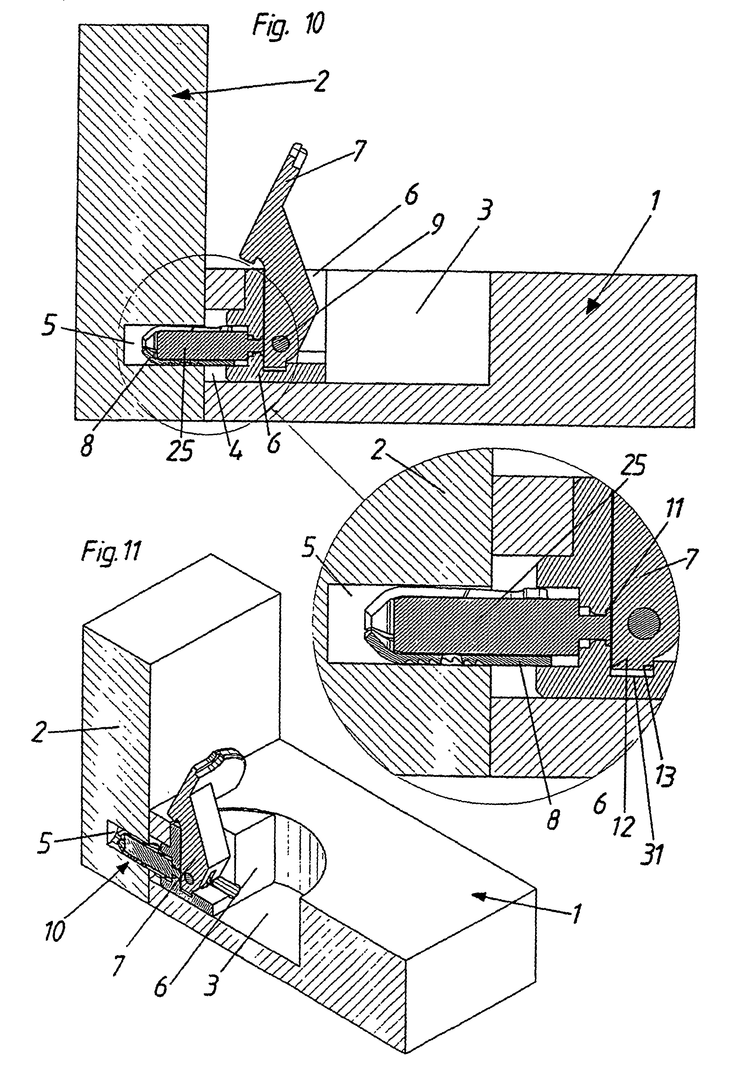

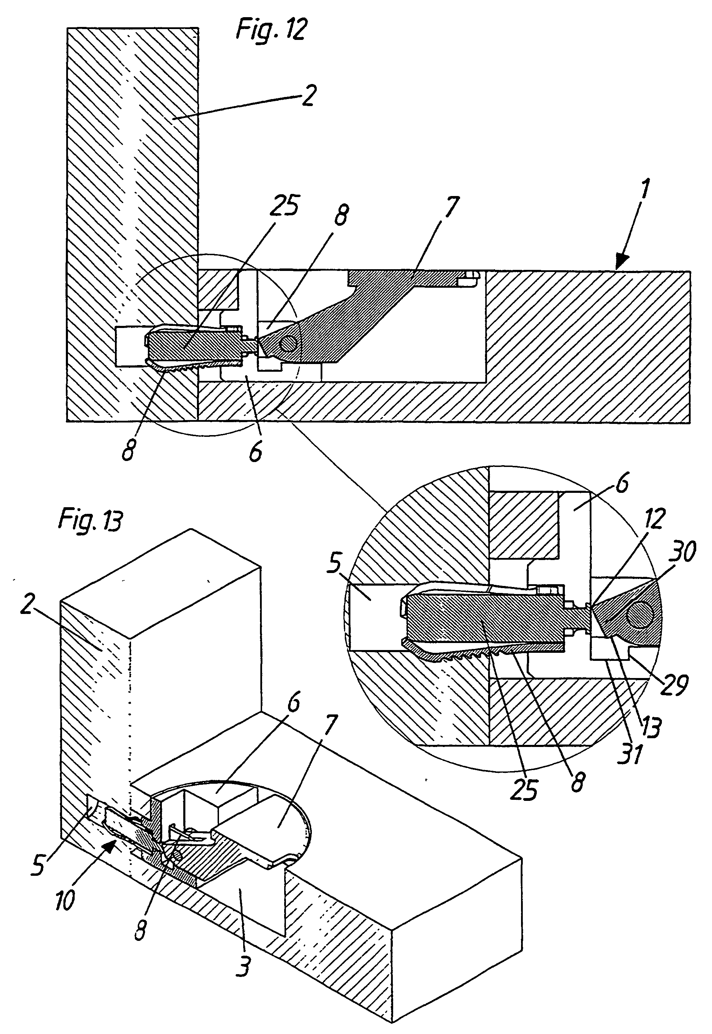

Zur Montage des Verbindungsbeschlages wird dieser, wie in den Fig. 4a bis 4d gezeigt, mit aufgekipptem Kipphebel 7 in die Bohrung 3 eingesetzt und anschließend verschoben, sodaß der Zapfen 10 aus dem Fachbrett 1 heraus und in die Bohrung 5 der Möbelseitenwand 2 ragt. Diese Situation ist auch in den Fig. 10 und 11 gezeigt.

Um das Fachbrett 1 an der Möbelseitenwand 2 zu fixieren, wird der Kipphebel 7 aus der in den Fig. 10 und 11 gezeigten entspannten Stellung in die in den Fig. 12 und 13 gezeigte Stellung gekippt.

Um die Stabilität des Beschlagkörpers 6 innerhalb der Bohrung 3 zu verbessern, ist der Beschlagkörper 6 an seiner gekrümmten Wand mit einem Sockel 20 versehen, der kreisrund ausgeführt ist und dessen Durchmesser dem Durchmesser der Bohrung 4 im Fachbrett 1 entspricht.

Mit dem erfindungsgemäßen Verbindungsbeschlag ist es ohne weiteres möglich, Fachbretter 1 oder Ober- und Unterböden nachträglich in den Möbelkorpus einzusetzen, da der Verbindungsbeschlag in der Bohrung 3 derart aufgenommen sein kann, daß der Zapfen 10 nicht über die Stirnwand des Fachbrettes 1 oder des Fachbodens hinausragt. Erst wenn sich das Fachbrett 1 in der richtigen Position befindet, kann der Verbindungsbeschlag innerhalb der Bohrung 3 verschoben werden, sodaß der Zapfen 10 in die Bohrung 5 in der Möbelseitenwand 2 ragt.

Die gewölbte Gehäusewand 14 des Verbindungsbeschlages ist der Wandung der Bohrung 3 angepaßt, sodaß der Beschlagkörper 6 satt an der Bohrungswand anliegt und entsprechend stabil gehalten ist.

Der Kipphebel 7 weist eine Spannkante 12 auf, mit der er sich in der Spannstellung an der Innenwand des Beschlagkörpers 6 bzw. am Kopf des Spreizteiles 25 abstützt, und eine Demontagefläche 13, mit der er in der entspannten Stellung an einer Gegenfläche 29 im Beschlagkörper 6 anliegt. Die Nase 30 des Kippteiles 7, an der die Spannkante 12 und die Demontagefläche 13 ausgebildet sind, ist dabei in einer Nut 31 im Boden des Beschlagkörpers 6 aufgenommen.

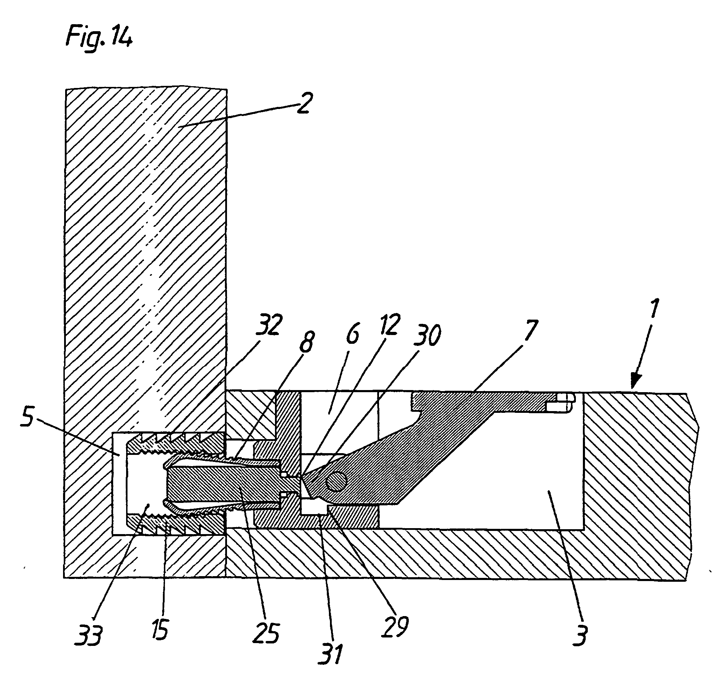

In den in den Fig. 14 bis 17 gezeigten Ausführungsbeispielen ist der Zapfen 10 nicht unmittelbar in der Bohrung 5 der Möbelseitenwand 2 verankert, sondern in einer dübelartigen Einsatzhülse 15, 16, 17, 18.

Die Einsatzhülse 15 ist in eine als Sackbohrung ausgeführte Bohrung 5 eingesetzt. Sie weist außen Rippen 32 auf, die den Halt der Einsatzhülse 15 in der Bohrung 5 verbessern, und ist innen mit Rippen 33 versehen, die mit den Rippen 27 an der Dübelhülse 8 des Verbindungsbeschlages zusammenwirken.

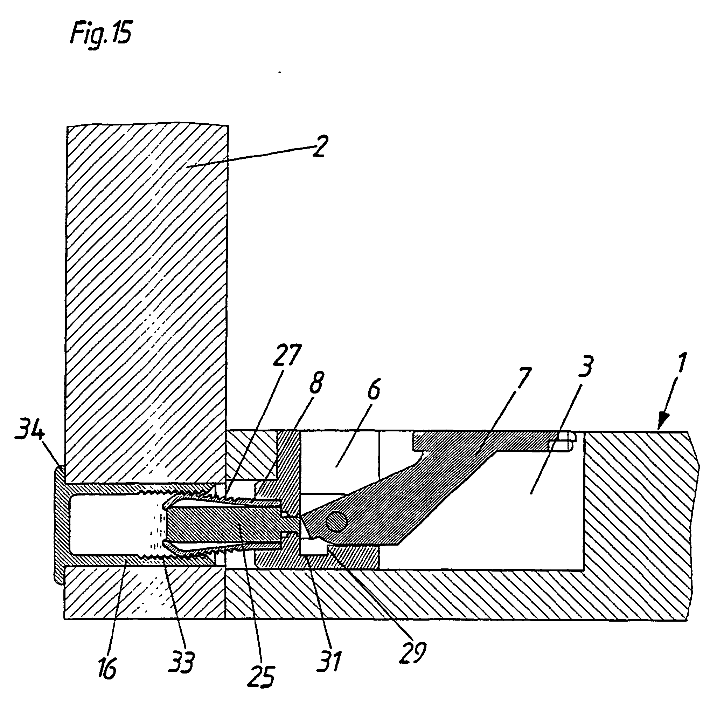

Im Ausführungsbeispiel nach der Fig. 15 ist die Bohrung 5 als durchgehende Bohrung ausgeführt und die Einsatzhülse 16 weist einen Flansch 34 auf, mit dem sie sich an der Außenfläche der Seitenwand 2 abstützt.

Innen ist die Einsatzhülse 16 wiederum mit einer Verzahnung 33 versehen, die mit der Verzahnung 27 der Dübelhülse 8 in Eingriff ist.

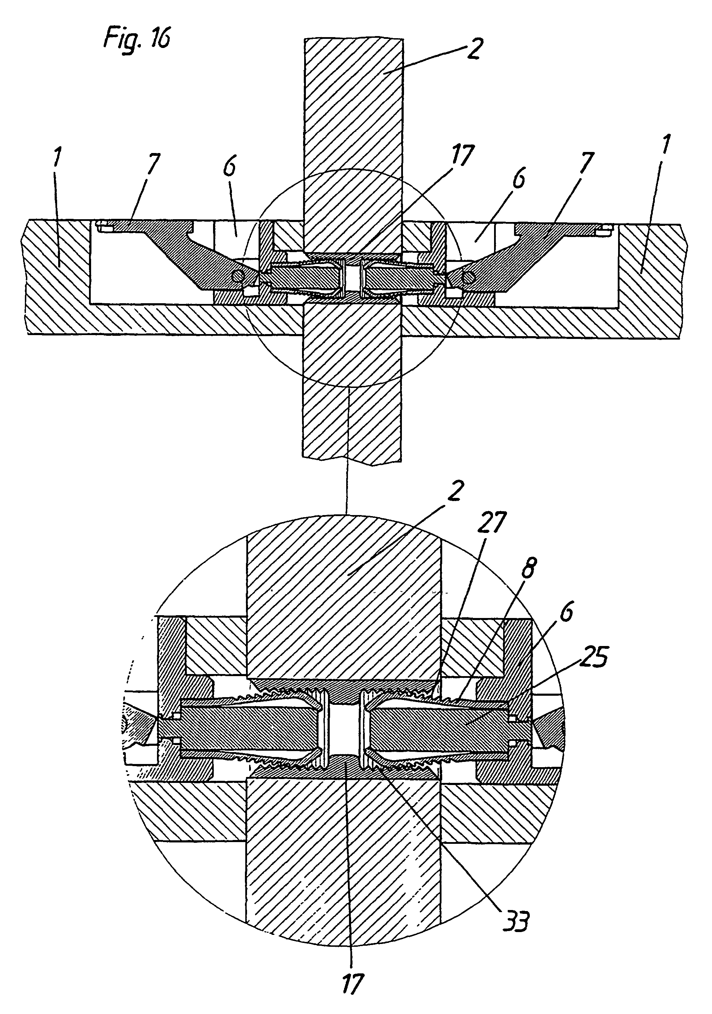

Die Fig. 16 zeigt eine Einsatzhülse 17, die es ermöglicht, zwei Fachbretter 1 mit einer Möbelseitenwand 2 zu verbinden. Die Einsatzhülse 17 ist an beiden Enden mit Rippen 33 versehen, die mit den Rippen 27 an der Dübelhülse 8 zusammenwirken und die eine feste Verankerung der Dübelhülsen 8 in der Einsatzhülse 17 garantieren.

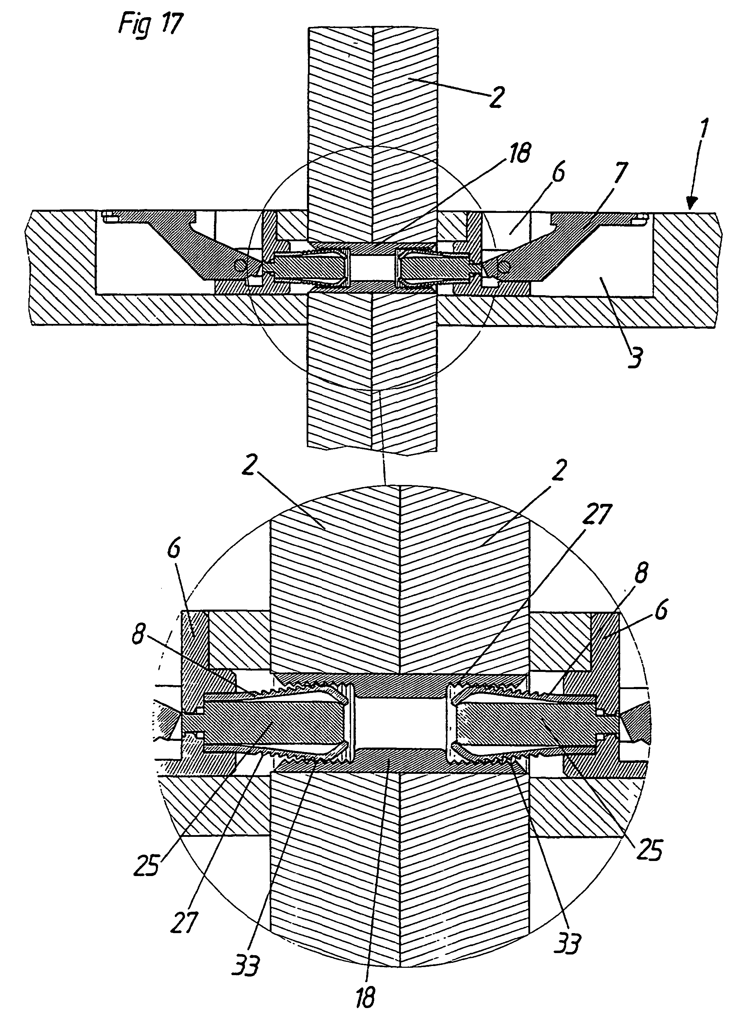

Die Fig. 17 zeigt eine Verbindung zweier Seitenwände 2 und zweier Fachbretter 1 mittels zweier erfindungsgemäßer Verbindungsbeschläge und einer durchgehenden Einsatzhülse 18. Die Einsatzhülse 18 ist ähnlich wie die Einsatzhülse 17 ausgeführt, nur länger.

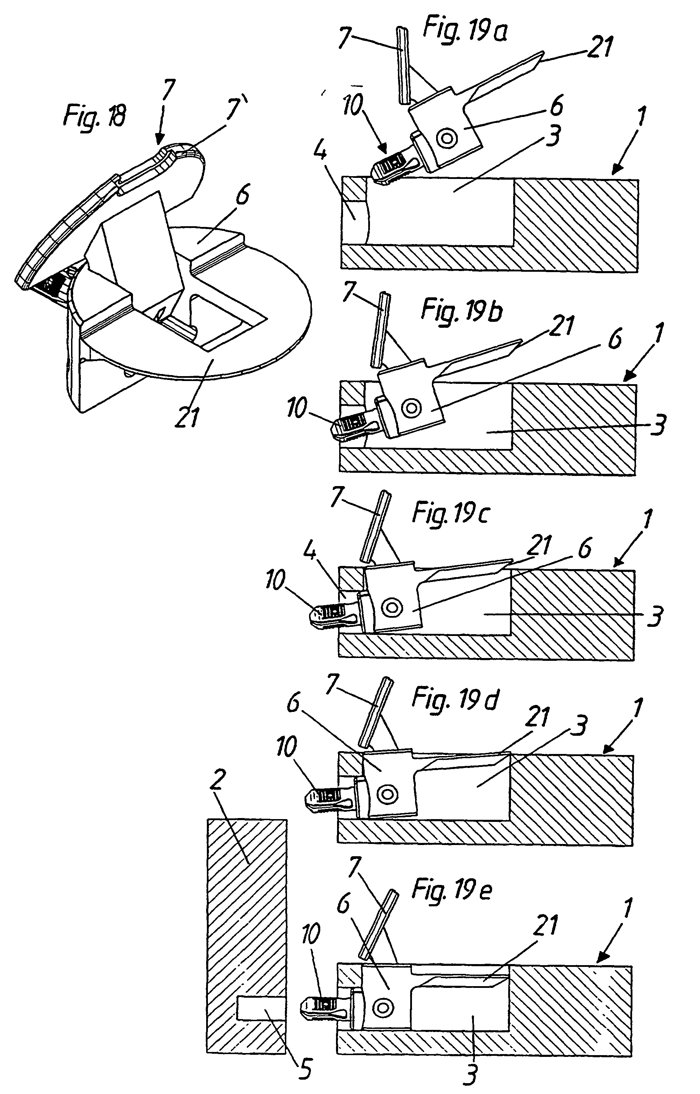

Um die Stabilität des Beschlagkörpers 6 in der Bohrung 3 zu verbessern, ist dieser im Ausführungsbeispiel nach den Figuren 18 und 19 mit einer Strebe versehen, die als fix angeformte Platte 21 ausgebildet ist.

Die Platte 21 ergänzt das Kreiszylindersegment des Beschlagkörpers 6 zu einem Vollkreis, sodaß die Bohrung 3 vom Beschlagkörper 6 mit der Platte 21 ausgefüllt wird.

Die Platte 21 befindet sich in der Nähe der oberen Abschlußfläche des Beschlagkörpers 6 und deckt somit die Bohrung 3 ab.

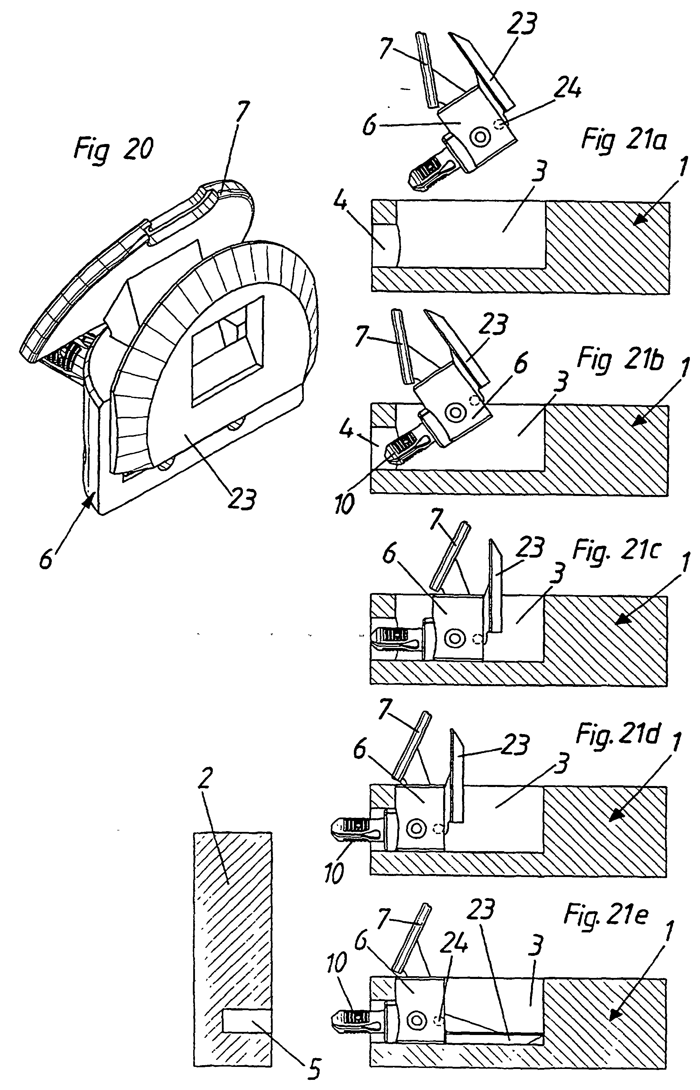

Im Ausführungsbeispiel nach den Fig. 20 und 21 ist die Strebe als kippbare Platte 23 ausgeführt. Beim Einsetzen des Beschlagkörpers 6 in die Bohrung 3 wird die Platte 23 wie der Kipphebel 7 nach oben gekippt. Der Beschlagkörper 6 wird anschließend, wie in den Fig. 21a bis 21e gezeigt, in die Bohrung 3 eingesetzt und dann nach vorne geschoben, sodaß der Zapfen 10 aus dem Fachbrett 1 herausragt. Anschließend wird die Platte 23, die mittels eines Gelenkes 24 mit dem Beschlagkörper 6 verbunden ist, nach unten gekippt, sodaß sie vorzugsweise am Boden der Bohrung 3 anliegt. Der Beschlagkörper 6 und die Platte 23 ergänzen sich wiederum zu einem Vollkreis, der die gesamte Bohrung 3 ausfüllt, wodurch ein stabiler Halt des Beschlagkörpers 6 in der Bohrung 3 gewährleistet ist.

## Patentansprüche

1. Verbindungsbeschlag zum lösbaren Verbinden zweier Möbelteile, insbesondere zum Verbinden zweier plattenförmiger Möbelteile, mit einem an einem der Möbelteile zu befestigenden Zapfen und einem in eine flachseitige Bohrung in dem anderen Möbelteil einsetzbaren Beschlagkörper, in dem ein Spannteil gelagert ist, wobei der Zapfen in den Beschlagkörper ragt, **dadurch gekennzeichnet, daß** der Beschlagkörper (6) als Kreiszylindersegment mit einer bogenförmigen und einer zumindest annähernd flachen Wand ausgeführt ist, der bei gelöstem Beschlag in der flachseitigen Bohrung verschiebbar ist, wobei der Zapfen (10) in der Spannstellung aus der bogenförmigen Wand (14) des Beschlagkörpers (6) herausragt, und wobei der Zapfen (10) einen in Bezug zum Beschlagkörper (6) axial unverschiebbaren Spreizteil (25) und eine den Spreizteil (25) umgebende Dübelhülse (8) aufweist, die durch den Spannteil bewegbar ist.

2. Verbindungsbeschlag nach Anspruch 1, **dadurch gekennzeichnet, daß** der Zapfen (10) mit dem Beschlagkörper (6) untrennbar verbunden ist.

3. Verbindungsbeschlag nach Anspruch 1 oder 2, **dadurch gekennzeichnet, daß** an die flache Wand des Beschlagkörpers (6) eine sich in Montagelage in der Bohrung (3) radial erstreckende Strebe anschließt, deren freier Rand vorzugsweise an der Wand der Bohrung (3) anliegt.

4. Verbindungsbeschlag nach Anspruch 3, **dadurch gekennzeichnet, daß** die Strebe als Platte (21, 23) ausgeführt ist, die, zumindest in der Montagelage, in der Draufsicht das Kreiszylindersegment des Beschlagkörpers (6) zu einem Vollkreis ergänzt.

5. Verbindungsbeschlag nach Anspruch 3 oder 4, **dadurch gekennzeichnet, daß** die Strebe bzw. die Platte (23) am Beschlagkörper (6) kippbar angelenkt ist.

6. Verbindungsbeschlag nach einem der Ansprüche 1 bis 5, **dadurch gekennzeichnet, daß** der Spannteil als drehbar gelagerter Kipphebel (7) ausgeführt ist und daß am Kipphebel (7) eine kreissegmentförmige Platte (21) angeformt ist, die in der Spannstellung des Kipphebels (7) die Bohrung (3), in die der Beschlagkörper (6) eingesetzt ist, bereichsweise abdeckt.

7. Verbindungsbeschlag nach Anspruch 3 oder 4, **dadurch gekennzeichnet, daß** die Strebe bzw. Platte (21) am Beschlagkörper (6) angeformt ist und sich in Montagelage im oberen Bereich der Bohrung im Möbelteil befindet.

8. Verbindungsbeschlag nach einem der Ansprüche 1 bis 7, **dadurch gekennzeichnet, daß** der Beschlagkörper (6) an seiner gebogenen Wand (14) einen Sockel (20) aufweist, durch den der Zapfen (10) ragt.

9. Verbindungsbeschlag nach einem der Ansprüche 1 bis 8, **dadurch gekennzeichnet, daß** der Spannteil relativ zum Beschlagkörper (6) bewegbar ist.

10. Verbindungsbeschlag nach einem der Ansprüche 1 bis 9, **dadurch gekennzeichnet, daß** der Zapfen (10) und der Beschlagkörper (6) ständig miteinander verbunden sind.

## Claims

1. A joint device for releasably connecting two furniture parts, in particular for connecting two plate-like furniture parts, with a pin-shaped member attachable to one of the furniture parts and a fitting body insertable into a flat-sided bore in the other furniture part, a tightening element being arranged in the fitting body, wherein the pin-shaped member protrudes into the fitting body, **characterized In that** said fitting body (6) is constructed as a circle cylinder segment with an arc-shaped and an at least approximately flat wall, said fitting body (6) being displacable In the flat-sided bore when in the non-tightened position, wherein said pin-shaped member (10) protrudes from the arc-shaped wall (14) of the fitting body (6) when in the tightened position, and wherein said pin-shaped member (10) comprises an in relation to said fitting body (6) axially non-displaceable spreading part (25) and an expansion anchor (8) surrounding said spreading part (25) and wherein the expansion anchor (8) is movable by the tightening element.

2. A joint device according to claim 1, **characterized in that** said pin-shaped member (10) is rigidly connected to said fitting body (6).

3. A joint device according to claim 1 or 2, **characterized in that** a strut is affiliated to said flat wall of said fitting body (6), said strut extending radially in the bore (3) when assembled and said strut's free border preferably abutting the wall of the bore (3).

4. A joint device according to claim 3, **characterized in that** said strut is constructed as a plate (21, 23), which in top plan view, at least when assembled, said plate (21, 23) complementing said circle cylinder segment of the fitting body (6) to a complete circle.

5. A joint device according to claim 3 or 4, **characterized in that** said strut or plate (23), respectively, is tiltably connected to said fitting body (6).

6. A joint device according to one of claims 1 to 5, charactenzed in that said tightening element is constructed as a turning tilting lever (7), said tilting lever (7) having a circle-segment-shaped plate (21), which, when assembled, partly covers the bore (3), in which the fitting body (6) is inserted

7. A joint device according to claim 3 or 4, **characterized in that** said strut or plate (21), respectively, is formed to the fitting body (6) and, when assembled, is located in the upper part of the bore (3) in the furniture part (1).

8. A joint device according to one of claims 1 to 7, **characterized in that** the fitting body (6) comprises a base (20) at its arc-shaped wall (14), said pin-shaped member (10) protruding through said base (20).

9. A joint device according to one of claims 1 to 8, **characterized in that** said tightening element is movable relative to said fitting body (6).

10. A joint device according to one of claims 1 to 9, **characterized in that** said pin-shaped member (10) and said fitting body (6) are constantly connected with each other.

## Revendications

1. Ferrure d'assemblage pour l'assemblage démontable de deux éléments de meuble, en particulier pour assembler deux éléments de meuble en forme de plateaux, comprenant une cheville à fixer sur l'un des éléments de meuble et un corps de ferrure à insérer dans un alésage situé dans le côté plat de l'autre élément de meuble, dans lequel est disposé un élément de serrage, la cheville se prolongeant dans le corps de ferrure, **caractérisée en ce que** le corps de ferrure (6) est réalisé sous forme de segment cylindrique circulaire ayant une paroi arquée et une paroi au moins à peu près plane, qui peut coulisser dans l'alésage situé dans le côté plat lorsque la ferrure est desserrée, dans laquelle la cheville (10) dépasse de la paroi arquée (14) du corps de ferrure (6) en position serrée et la cheville (10) présente un élément d'expansion (25) axialement fixe par rapport au corps de ferrure (6) et une douille (8) entourant l'élément d'expansion (25), qui peut se déplacer par l'action de l'élément de serrage.

2. Ferrure d'assemblage selon la revendication 1, **caractérisée en ce que** la cheville (10) est reliée au corps de ferrure (6) de manière inséparable.

3. Ferrure d'assemblage selon la revendication 1 ou 2, **caractérisée en ce que** la paroi plane du corps de ferrure (6) se prolonge par un support, s'étendant radialement dans l'alésage (3) en position de montage et dont le bord libre est de préférence adjacent à la paroi de l'alésage (3).

4. Ferrure d'assemblage selon la revendication 3, **caractérisée en ce que** le support est réalisé sous forme de plaque (21, 23) qui, au moins en position de montage, complète le segment de cylindre circulaire du corps de ferrure (6), vu de dessus, pour former un cercle complet.

5. Ferrure d'assemblage selon la revendication 3 ou 4, **caractérisée en ce que** le support ou la plaque (23) est articulé sur le corps de ferrure (6) de manière basculante.

6. Ferrure d'assemblage selon l'une des revendications 1 à 5, **caractérisée en ce que** l'élément de serrage est réalisé sous forme de basculeur (7) pivotant et **en ce qu'**une plaque (21) en forme de segment de cercle est moulée sur le basculeur (7), plaque qui, en position serrée du basculeur (7), recouvre par endroits l'alésage (3) dans lequel est logé le corps de ferrure (6).

7. Ferrure d'assemblage selon la revendication 3 ou 4, **caractérisée en ce que** le support ou la plaque (21) est moulé sur le corps de ferrure (6) et qu'il se trouve, en position de montage, dans la partie supérieure de l'alésage de l'élément de meuble.

8. Ferrure d'assemblage selon l'une des revendications 1 à 7, **caractérisée en ce que** le corps de ferrure (6) présente, au niveau de sa paroi arquée (14), un collet (20) duquel dépasse la cheville (10).

9. Ferrure d'assemblage selon l'une des revendications 1 à 8, **caractérisée en ce que** l'élément de serrage est mobile par rapport au corps de ferrure (6).

10. Ferrure d'assemblage selon l'une des revendications 1 à 9, **caractérisée en ce que** la cheville (10) et le corps de ferrure (6) sont reliés l'un à l'autre en permanence.
